# EUROPÄISCHE PATENTSCHRIFT

(11) **EP 4 041 938 B1**
(45) Veröffentlichungstag und Bekanntmachung des Hinweises auf die Patenterteilung: **22.07.2026**
(21) Anmeldenummer: 20788767.0
(22) Anmeldetag: 07.10.2020
(51) Int. Cl.: C25B 1/02, C25B 1/23, C25B 15/08

(54) **VERFAHREN UND VORRICHTUNG ZUR HERSTELLUNG VON KOHLENMONOXID**
METHOD AND DEVICE FOR THE PRODUCTION OF CARBON MONOXIDE
PROCÉDÉ ET DISPOSITIF DE PRODUCTION DE MONOXYDE DE CARBONE

(30) Priorität: 08.10.2019 DE 102019127037
(43) Veröffentlichungstag der Anmeldung: 17.08.2022
(73) Patentinhaber: Forschungszentrum Jülich GmbH, 52425 Jülich (DE)
(72) Erfinder: FOIT, Severin, 52441 Linnich (DE); DITTRICH, Lucy, 52074 Aachen (DE); DE HAART, L.G.J., 6291 EA Vaals (NL); EICHEL, Rüdiger-A., 52428 Jülich (DE)
(74) Vertreter: Schwenderling, Jens
(86) Internationale Anmeldenummer: PCT/EP2020/078128
(87) Internationale Veröffentlichungsnummer: WO 2021/069498

(56) Entgegenhaltungen:
- WO-A1-2012/118065
- DE-A1- 102015 226 111
- US-A1- 2019 127 865

## Beschreibung

Die vorliegende Erfindung betrifft ein Verfahren und eine Vorrichtung zur Herstellung von Kohlenmonoxid, siehe Ansprüche 1 und 4.

Bei vielen Verfahren zur Energiegewinnung wird Kohlendioxid freigesetzt. Um die klimaschädlichen Einflüsse von Kohlendioxid in der Atmosphäre zu reduzieren, kann das Kohlendioxid in andere Stoffe überführt werden. Das ist aber dadurch erschwert, dass Kohlendioxid stabil und wenig reaktiv ist. Zudem liegt der Kohlenstoff im Kohlendioxid-Molekül in seiner höchsten Oxidationsstufe vor. Kohlendioxid kann also nicht weiter durch Verbrennung zur Energiegewinnung genutzt werden.

Kohlendioxid kann aber unter Energiezufuhr zu Kohlenmonoxid reduziert werden.

Im Kohlenmonoxid liegt der Kohlenstoff in einer niedrigeren Oxidationsstufe vor als im Kohlendioxid. Entsprechend kann Kohlenmonoxid für mehr Anwendungen genutzt werden als Kohlendioxid. Durch Umwandlung von Kohlendioxid in Kohlenmonoxid wird also nicht nur die Menge klimaschädlichen Kohlendioxids reduziert. Zusätzlich wird mit Kohlenmonoxid auch ein wertvoller chemischer Rohstoff erhalten.

Beispielsweise bildet Kohlenmonoxid zusammen mit Wasserstoff ein Synthesegas, welches die zur Produktion von wichtigen organischen Chemikalien erforderlichen Elemente Kohlenstoff, Sauerstoff und Wasserstoff enthält. Damit eignet sich dieses Synthesegas für viele petrochemische Prozesse, beispielsweise zur Herstellung von synthetischem Brennstoff, Erdgas, Methanol oder Formaldehyd. Wasserstoff kann über verschiedene Verfahren vergleichsweise einfach gewonnen werden. Daher kommt der Herstellung von Kohlenmonoxid eine besondere Bedeutung zu.

Die Herstellung einer Chemikalie unter Energiezufuhr ist auch als "*Power-to-X"* bekannt, weil mit Energie ("*Power*") eine Chemikalie ("*X*") erhalten werden kann. Durch Verwendung des klimaschädlichen Kohlendioxids als Ausgangsstoff kann dieses Konzept zur Reduzierung der Erderwärmung dienen. Zudem können fossile Brennstoffe durch die Erzeugung synthetischer Brennstoffe aus dem erhaltenen Kohlenmonoxid geschont werden. Synthetischer Brennstoff kann zum umweltfreundlichen Antrieb von Kraftfahrzeugen dienen, ohne dass umfangreiche Änderungen der Konstruktion der Kraftfahrzeuge erforderlich wären. Aus diesen Gründen kann die Umwandlung von Kohlendioxid in Kohlenmonoxid einen Beitrag zur Energiewende leisten, insbesondere wenn für die Umwandlung des Kohlendioxids in Kohlenmonoxid erneuerbare Energie genutzt wird.

Aus dem Stand der Technik sind Elektrolyseverfahren bekannt, mit denen Kohlendioxid unter Energiezufuhr in Kohlenmonoxid umgewandelt werden kann. Diese haben allerdings einen geringen Wirkungsgrad.

Aus der US 2019/127 865 A1 und der WO 2012/118 065 A1 sind Verfahren bekannt, mit denen Kohlenmonoxid erhalten werden kann. Weiterhin ist aus der DE 10 2015 226 111 A1 ein Verfahren zur Erzeugung von Kohlenstoff-basierten Sekundärenergieträgern oder Basischemikalien durch Kopplung einer Oxyfuel-Verbrennung Kohlenstoff-basierter Brennstoffe und einer Hochtemperatur-Festelektrolyt-Elektrolyse (HT-SOEL) bekannt.

Hiervon ausgehend liegt der vorliegenden Erfindung die Aufgabe zugrunde, die aus dem Stand der Technik bekannten Probleme zumindest teilweise zu überwinden und insbesondere ein Verfahren und eine Vorrichtung zur Herstellung von Kohlenmonoxid vorzustellen, mit denen ein verbesserter Wirkungsgrad erzielt werden kann.

Diese Aufgaben werden gelöst mit den Merkmalen der unabhängigen Verfahren- und Vorrichtungsansprüche 1 und 4.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Erfindungsgemäß wird ein Verfahren zur Herstellung von Kohlenmonoxid vorgestellt, siehe Anspruch 1. Das Verfahren umfasst inter alia:
a) Befeuchten eines Kohlendioxid umfassenden Eduktgases mit Wasser,
b) Zuleiten des befeuchteten Eduktgases aus Schritt a) in eine Elektrolysezelle, und
c) Elektrolysieren des gemäß Schritt b) zugeleiteten befeuchteten Eduktgases in der Elektrolysezelle, so dass das Kohlenmonoxid erhalten wird.

Mit dem beschriebenen Verfahren kann Kohlenmonoxid hergestellt werden. Zusammen mit Wasserstoff bildet Kohlenmonoxid das zum Stand der Technik beschriebene Synthesegas. Das beschriebene Verfahren gehört zum Konzept des *"Power-to-X".* Im Gegensatz zur Co-Elektrolyse zielt das beschriebene Verfahren aber nicht auf die unmittelbare Herstellung von Synthesegas aus Kohlenmonoxid und Wasserstoff, sondern vordergründig auf die Herstellung von Kohlenmonoxid. Beim beschriebenen Verfahren kann zwar auch Wasserstoff entstehen, im Vergleich zur Co-Elektrolyse aber in geringerer Menge.

Das Kohlenmonoxid wird bei dem beschriebenen Verfahren durch Elektrolyse aus Kohlendioxid erhalten, und entsprechend der Erfindung nach Art der Hochtemperaturelektrolyse.

Dies erfolgt in einer Elektrolysezelle. Die Elektrolysezelle weist eine Anode und eine Kathode auf, die zumindest durch einen Elektrolyten voneinander getrennt sind. Neben dem Elektrolyten können weitere Schichten zwischen der Anode und der Kathode angeordnet sein. Vorzugsweise ist die Elektrolysezelle substratgestützt oder elektrolytgestützt ausgebildet. Als substratgestützte Ausbildung ist bevorzugt, dass die Kathode als eine Ni-YSZ-Elektrode ausgebildet ist, der Elektrolyt aus YSZ gebildet ist, eine Barriereschicht aus CGO zwischen dem Elektrolyten und der Anode angeordnet ist und die Anode aus LSC gebildet ist. Alternativ ist als elektrolytgestützte Ausbildung bevorzugt, dass die Kathode als eine Ni-CGO-Elektrode ausgebildet ist, der Elektrolyt aus YSZ gebildet ist, eine Barriereschicht aus CGO zwischen dem Elektrolyten und der Anode angeordnet ist und die Anode aus LSCF gebildet ist.

Weiterhin weist die Elektrolysezelle vorzugsweise einen Anodenraum auf, der an die Anode angrenzt. Im Anodenraum kann ein Gas an der Anode entlang strömen. Weiterhin weist die Elektrolysezelle einen Kathodenraum auf, der an die Kathode angrenzt. Im Kathodenraum strömt ein Gas an der Kathode entlang. Anodenraum und/oder Kathodenraum weisen vorzugsweise jeweils einen Einlass und einen Auslass auf.

Das für das beschriebene Verfahren verwendete Kohlendioxid kann aus einer beliebigen Quelle stammen. Das Kohlendioxid kann insbesondere als Produkt einer Verbrennung entstehen. Das bei einer Verbrennung entstehende Kohlendioxid enthaltende Gas wird vorzugsweise aufgereinigt, bevor es in die Elektrolysezelle geleitet wird. Vorzugsweise werden dabei insbesondere Schwefelverbindungen, Siliziumverbindungen, Halogenverbindungen und bestimmte Kohlenwasserstoffe, wie beispielsweise Aromate und Polyaromate, aus dem Gas entfernt. Das so gereinigte Gas kann der Elektrolyse unmittelbar zugeleitet werden. Alternativ kann das bei der Verbrennung entstehende Gas aber auch (vor oder nach einer Aufreinigung) in einem Behälter zwischengespeichert und/oder transportiert werden, um anschließend einer Aufreinigung oder der Elektrolysezelle zugeleitet zu werden.

Das beschriebene Verfahren geht von einem Eduktgas aus, welches Kohlendioxid umfasst. Das Eduktgas kann reines Kohlendioxid sein oder kann weitere Bestandteile aufweisen, insbesondere Kohlenmonoxid und/oder Wasserdampf. Vorzugsweise enthält das Eduktgas 5 bis 15 % Kohlenmonoxid. Dadurch kann beispielsweise eine Reoxidation von Nickel im Elektrolyten verhindert oder jedenfalls reduziert werden. Dass das beschriebene Verfahren der Herstellung von Kohlenmonoxid dient, schließt die Verwendung von Kohlenmonoxid als Edukt nicht aus. So kann mit dem beschriebenen Verfahren bei Verwendung von Kohlenmonoxid als Edukt weiteres Kohlenmonoxid hergestellt werden. Es kann also mit dem beschriebenen Verfahren die Menge und Kohlenmonoxid erhöht werden. Bei dem als Edukt verwendeten Kohlenmonoxid kann es sich - jedenfalls nachdem das Verfahren angelaufen ist - um Kohlenmonoxid aus dem Produktgas handeln. In dem Fall wird also ein Teil des erhaltenen Kohlenmonoxids dem Verfahren wieder zugeführt.

Das Eduktgas umfassend Kohlendioxid wird im gasförmigen Zustand über den Einlass des Kathodenraums in den Kathodenraum eingeleitet, so dass das Eduktgas an der Kathode entlang strömt.

Ist zwischen Anode und Kathode ein elektrischer Strom angelegt, wird das Kohlendioxid aus dem Eduktgas an der Kathode nach folgender chemischer Gleichungen reduziert:

CO₂(g) + 2e⁻ → CO(g) + O²⁻ (1)

Nach dieser Reaktionsgleichung wird ein Molekül gasförmigen Kohlendioxids (CO₂) unter Aufnahme zweier Elektronen (e⁻) zu einem Molekül gasförmigen Kohlenmonoxids (CO) und einem Sauerstoff-Ion (O²⁻) umgesetzt.

Der Elektrolyt ist vorzugsweise für Sauerstoff-Ionen (O²⁻) durchlässig, nicht aber für Gasmoleküle wie beispielsweise CO₂, CO, H₂O oder H₂. Die Sauerstoff-Ionen (O²⁻) können also vom Kathodenraum in den Anodenraum gelangen. Dort kann folgende Oxidationsreaktion ablaufen:

2 O²⁻ → O₂(g) + 4e⁻ (2)

Nach dieser Reaktionsgleichung werden zwei Sauerstoff-Ionen (O²⁻) zu einem Molekül gasförmigen Sauerstoffs (O₂) umgesetzt, wobei vier Elektronen (e⁻) freigesetzt werden.

Über eine Spannungsquelle können Elektronen von der Anode zur Kathode bewegt werden. Die Reaktionsgleichung (1) und (2) ergeben somit folgende Bilanzgleichung für die Elektrolysezelle:

x CO₂ → x CO + ½x O₂ (3)

Mit der Elektrolysezelle kann also unter Energiezufuhr Kohlenmonoxid aus Kohlendioxid erhalten werden. Das Kohlenmonoxid entsteht an der Kathode und kann über einen Auslass des Kathodenraums abgeleitet werden. Weiterhin wird im Anodenraum Sauerstoff gebildet, der über den Auslass des Anodenraums abgeleitet werden kann. Mit dem beschriebenen Verfahren kann also auch Sauerstoff hergestellt werden. Das Kohlenmonoxid und der Sauerstoff können also getrennt voneinander erhalten werden.

Es ist bevorzugt, dass der Anodenraum mit einem Spülgas gespült wird. Als Spülgas kommen beispielsweise Luft, Sauerstoff (O₂) und/oder Stickstoff (N₂) in Betracht. Durch das Spülgas kann der an der Anode gebildete Sauerstoff von der Anode weg geleitet werden. Der Partialdruck des Sauerstoffs an der Anode kann also gesenkt werden. Dadurch ist die für die Elektrolyse anzulegende Spannung zwischen Anode und Kathode geringer, wodurch Energie eingespart werden kann.

Durch das Spülgas kann also der Wirkungsgrad gesteigert werden. Das Spülgas wird vorzugsweise auf eine Temperatur im Bereich von 800 bis 900 °C erwärmt, bevor es in den Anodenraum eingeleitet wird. Dadurch können thermische Spannungen innerhalb der Elektrolysezelle vermieden werden.

Die Elektrolyse wird mit dem Edukt Kohlendioxid durchgeführt, das im gasförmigen Zustand der Elektrolysezelle zugeleitet wird. Das erfolgt in dem beschriebenen Verfahren gemäß Schritt b), so dass gemäß Schritt c) die Elektrolyse durchgeführt werden kann. Die Elektrolyse erfolgt entsprechend der Erfindung bei einer Temperatur von 800 bis 900 °C. Dazu wird das Eduktgas in Schritt b) auf diese Temperatur erwärmt. Während der Elektrolyse gemäß Schritt c) wird die Temperatur im Bereich von 800 und 900 °C gehalten.

Es hat sich herausgestellt, dass der Wirkungsgrad der Elektrolyse durch Befeuchten des Eduktgases vor der Elektrolyse und insbesondere vor der Erwärmung gesteigert werden kann. Zudem wurde festgestellt, dass das Eduktgas durch das Befeuchten gereinigt werden kann. Je nach Quelle des Kohlendioxids kann das Eduktgas Verunreinigungen enthalten, die durch das Befeuchten zumindest teilweise entfernt werden können.

In dem beschriebenen Verfahren wird daher das Eduktgas in Schritt a) befeuchtet. Unter Eduktgas ist das vor dem Befeuchten vorliegende Gas zu verstehen, das jedenfalls Kohlendioxid umfasst. Durch das Befeuchten wird das Eduktgas zum "befeuchteten Eduktgas", welches im Vergleich zum "Eduktgas" einen höheren Wasseranteil enthält. Das Befeuchten erfolgt vor dem Erwärmen für die Elektrolyse, so dass also das befeuchtete Eduktgas erwärmt wird.

Das befeuchtete Eduktgas wird der Elektrolysezelle zugeleitet, insbesondere durch Einleiten in den Kathodenraum. Bei der dann gemäß Schritt c) durchgeführten Elektrolyse kann ein erhöhter Wirkungsgrad erzielt werden. Dieser kann durch den Wasseranteil im befeuchteten Eduktgas erklärt werden. So kann an der Kathode das Wasser im Eduktgas nach folgender chemischer Gleichung reduziert werden:

H₂O(g) + 2e⁻ → H₂(g) + O²⁻ (4)

Nach dieser Reaktionsgleichung wird ein Wasserdampf-Molekül (H₂O) unter Aufnahme zweier Elektronen (e⁻) zu einem Molekül gasförmigen Wasserstoffs (H₂) und einem Sauerstoff-Ion (O²⁻) umgesetzt.

Weiterhin kann der Wasseranteil im Eduktgas nach folgender Reaktionsgleichung mit Kohlenmonoxid zu Kohlendoxid und Wasserstoff reagieren:

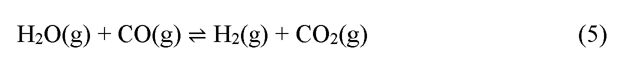

Bei dieser auch als "reversible water gas shift" bekannten Reaktion handelt es sich um eine Gleichgewichtsreaktion, so dass auch Kohlendoxid und Wasserstoff zu Kohlenmonoxid und Wasser reagieren können. Durch die Elektrolyse wird Kohlendioxid (CO₂) nach Reaktionsgleichung (1) zu Kohlenmonoxid reduziert und Wasserdampf (H₂O) nach Reaktionsgleichung (4) zu Wasserstoff (H₂). Dadurch werden die Anteile in Reaktionsgleichung (5) verändert, so dass das chemische Gleichgewicht gestört ist. Dies kann die Bildung von Wasserdampf (H₂O) und Kohlenmonoxid (CO) aus Wasserstoff (H₂) und Kohlendioxid (CO₂) bewirken. Die Elektrolyse mit befeuchtetem Eduktgas ist also besonders effizient, weil mit bei der Elektrolyse gebildetem Wasserstoff die Umsetzung von Kohlendioxid zu Kohlenmonoxid zusätzlich unterstützt werden kann.

Das Produktgas kann wegen Reaktionsgleichung (5) einen Anteil gasförmigen Kohlendioxids und/oder einen Anteil Wasserdampf enthalten. Es ist bevorzugt, dass das Produktgas nach Austritt aus dem Auslass des Kathodenraums in Kohlenmonoxid einerseits und alle übrigen Stoffe andererseits aufgetrennt wird.

Die übrigen Stoffe können vor allem Kohlendioxid und/oder Wasser sein. Das abgetrennte Kohlendioxid und/oder Wasser kann der Elektrolyse erneut zugeführt werden.

Das Befeuchten gemäß Schritt a) erfolgt mit Wasser. Es wird also nicht bloß Wasserdampf dem Eduktgas zugegeben. Das wäre energetisch nachteilig, weil zum Verdampfen von Wasser ein erheblicher Energieeintrag erforderlich wäre. Insbesondere insoweit unterscheidet sich das beschriebene Verfahren von einer Co-Elektrolyse. Das befeuchtete Eduktgas enthält einen Wasseranteil. Zum Befeuchten des Eduktgases können verschiedene Verfahren eingesetzt werden. Beispielsweise kann das Eduktgas durch einen Befeuchter in einer Zuleitung zum Kathodenraum geleitet werden.

Gemäß der Erfimdung wird das Eduktgas in Schritt a) durch das Wasser geleitet.

Es hat sich herausgestellt, dass es bei dem beschriebenen Verfahren besonders effizient ist, das Eduktgas durch Wasser zu leiten. "Durchleiten" bedeutet in dem Zusammenhang, dass das Eduktgas in das Wasser eingeleitet wird, unmittelbar mit dem Wasser in Kontakt kommt und anschließend aufgefangen wird. Es genügt also nicht, dass das Eduktgas durch eine von dem Wasser umgebene Leitung geleitet wird, so dass es zu keinem unmittelbaren Kontakt zwischen dem Eduktgas und dem Wasser kommt. Vorzugsweise wird das Eduktgas in Form von Blasen durch das Wasser geleitet. Beispielsweise kann das Eduktgas aus einer Vielzahl von Düsenöffnungen unterhalb einer Wasseroberfläche in das Wasser eingeleitet werden. Das Eduktgas steigt dann als Blasen im Wasser auf. Anschließend kann das Eduktgas nach Austreten aus dem flüssigen Wasser aufgesammelt und über einen Schlauch oder ein Rohr weitergeleitet werden oder unmittelbar über einen Schlauch oder ein Rohr weitergeleitet werden. Das befeuchtete Eduktgas kann mit einer Pumpe komprimiert werden, was aber nicht erforderlich ist.

Gemäß eines Aspekts nicht von der Erfindung gestützt liegt das Wasser in Schritt a) bei einer Temperatur im Bereich von 18 bis 25 °C vor.

Der angegebene Temperaturbereich entspricht der üblichen Raumtemperatur. Eine Steigerung des Wirkungsgrades kann bereits erzielt werden, wenn das Kohlendioxid in Schritt a) durch das Wasser geleitet wird, welches eine derartige Temperatur hat. Entsprechend ist keine Heizung für das Wasser erforderlich. Auch muss keine Energie zur Erwärmung des Wassers aufgewendet werden.

Bei Verwendung von Wasser mit einer Temperatur im Bereich von 18 bis 25 °C kann ein Feuchtegrad des Kohlendioxids von 3 bis 5 % erreicht werden.

Wird beispielsweise ein Gemisch von 90 % gasförmigem Kohlendioxid und 10 % gasförmigem Kohlenmonoxid als Eduktgas verwendet und in Schritt a) mit 18 bis 25 °C warmem Wasser befeuchtet, kann ein befeuchtetes Eduktgas mit 87,3 % gasförmigem Kohlendioxid, 9,7 % gasförmigem Kohlenmonoxid und 3,0 % Wasserdampf erhalten werden. Dieses kann anschließend der Elektrolyse zugegeben werden. Das an der Kathode erhaltene Produktgas kann in dem Fall weniger als 1 % Wasserstoff aufweisen. Das ist durch die Verschiebung des Gleichgewichts aus Reaktionsgleichung (5) zu erklären.

Gemäß einer bevorzugten Ausführungsform des Verfahrens liegt das Wasser in Schritt a) bei einer Temperatur im Bereich von 25 bis 40°C vor.

In dieser Ausführungsform ist das Wasser gegenüber Raumtemperatur erwärmt.

Durch Verwendung von erwärmtem Wasser kann ein erhöhter Feuchtegrad des Kohlendioxids erreicht werden. So kann beispielsweise bei einer Wassertemperatur von 33 °C ein Feuchtegrad des Kohlendioxids von 5 % erzielt werden.

Wird beispielsweise ein Gemisch von 90 % gasförmigem Kohlendioxid und 10 % gasförmigem Kohlenmonoxid als Eduktgas verwendet und in Schritt a) mit 33 °C warmem Wasser befeuchtet, kann ein befeuchtetes Eduktgas mit 85,5 % gasförmigem Kohlendioxid, 9,5 % gasförmigem Kohlenmonoxid und 5,0 % Wasserdampf erhalten werden, welches der Elektrolyse zugegeben werden kann. Das an der Kathode erhaltene Produktgas kann auch in dem Fall weniger als 1 % Wasserstoff aufweisen. Das ist wiederum durch Verschiebung des Gleichgewichts aus Reaktionsgleichung (5) zu erklären.

Zur Erwärmung des Wassers können verschiedene Verfahren genutzt werden. Beispielsweise können eine Heizung, ein Tauchsieder und/oder ein Wärmetauscher eingesetzt werden.

Das für Schritt a) genutzte Wasser wird entsprechend der Erfindung durch Wärme eines Produktes der Elektrolyse aus Schritt c) erwärmt.

Die Wärme der Produkte der Elektrolyse kann rückgewonnen und genutzt werden. Als Produkte kommen sowohl die an der Kathode als auch an der Anode entstehenden Produkte in Betracht. An der Kathode ist dies zum einen das mit dem beschriebenen Verfahren hergestellte Kohlenmonoxid. Weiterhin kann an der Kathode Wasserstoff gebildet werden. An der Anode wird Sauerstoff gebildet. Die Produkte der Elektrolyse können insbesondere aufgrund einer Erwärmung des Eduktgases vor der Elektrolyse eine nutzbare Wärmeenergie aufweisen. Dies gilt auch für Anteile im Eduktgas, die ohne an einer chemischen Reaktion beteiligt zu sein den Kathodenraum wieder verlassen. Wurden auch diese Anteile vor der Elektrolyse erwärmt, kann deren Wärmeenergie nach der Elektrolyse für die Erwärmung des für Schritt a) genutzten Wassers rückgewonnen werden. Auch können die Produkte aufgrund der ablaufenden chemischen Reaktionen erwärmt sein.

Die Wärme der Produkte der Elektrolyse kann auf verschiedene Arten zur Erwärmung des Wassers für Schritt a) genutzt werden. Beispielsweise kann ein Produktgasstrom durch eine Leitung innerhalb des Wassers geleitet werden. Um Wärme über eine möglichst große Leitungslänge abgeben zu können, ist die Leitung vorzugsweise spiralförmig ausgebildet.

Durch die Leitung werden vorzugsweise nur die Produkte von der Kathode oder nur die Produkte der Anode geleitet, so dass es zu keiner Vermischung dieser Produkte kommt. Es ist auch möglich, eine jeweilige Leitung für die Produkte der Anode einerseits und für die Produkte der Kathode andererseits vorzusehen. Auch dadurch kann eine Vermischung verhindert werden.

Alternativ kann die Wärme der Produkte oder eines Teils der Produkte über einen Wärmetauscher an ein Wärmeträgermedium abgegeben werden. Das Wärmeträgermedium kann zu einem weiteren Wärmetauscher geleitet werden, in dem das Wärmeträgermedium seine Wärme an das für Schritt a) genutzte Wasser abgibt. Durch den Wärmetauscher werden vorzugsweise nur die Produkte von der Kathode oder nur die Produkte von der Anode geleitet, so dass es zu keiner Vermischung dieser Produkte kommt. Es ist auch möglich, einen jeweiligen Wärmetauscher und/oder einen jeweiligen Zweig eines gemeinsamen Wärmetauschers für die Produkte der Anode einerseits und für die Produkte der Kathode andererseits vorzusehen.

Gemäß einer weiteren bevorzugten Ausführungsform des Verfahrens wird Schritt a) derart durchgeführt, dass nach Schritt a) ein Wassergehalt des befeuchteten Eduktgases 2 bis 6 % beträgt.

Der Wassergehalt des befeuchteten Eduktgases nach Schritt a) kann durch verschiedene Maßnahmen eingestellt werden. Wird Kohlendioxid beispielsweise als Blasen durch das Wasser hindurchgeleitet, kann bei einer höheren Wassertemperatur, einer höheren Kohlendioxidtemperatur, einem geringeren Kohlendioxidfluss, einer kleineren Blasengröße und/oder einer größeren Strecke zur Wasseroberfläche mehr Wasser aufgenommen werden. Durch Veränderung dieser und/oder anderer Parameter kann der Wassergehalt des befeuchteten Eduktgases eingestellt werden. Die Parameter für einen bestimmten gewünschten Wassergehalt können experimentell bestimmt werden.

Die Ausbeute an Kohlenmonoxid ist umso höher, je niedriger der Wassergehalt im befeuchteten Eduktgas ist. Der Wirkungsgrad steigt mit dem Wassergehalt des befeuchteten Eduktgases bis zu einem Wassergehalt des befeuchteten Eduktgases von etwa 20 %. Es hat sich herausgestellt, dass ein Wassergehalt von 2 bis 6 % im befeuchteten Eduktgas einen guten Kompromiss zwischen diesen beiden Aspekten darstellt.

Als weiterer Aspekt der Erfindung wird eine Vorrichtung zur Herstellung von Kohlenmonoxid vorgestellt, siehe Anspruch 4. Die Vorrichtung umfasst inter alia :
- eine Elektrolysezelle mit einer Anode und einer Kathode, die durch einen Elektrolyten voneinander getrennt sind, sowie einem an die Kathode angrenzenden Kathodenraum, und
- eine Zuleitung zum Kathodenraum, welche einen Befeuchter umfasst.

Die beschriebenen besonderen Vorteile und Ausgestaltungsmerkmale des Verfahrens sind auf die Vorrichtung anwendbar und übertragbar, und umgekehrt. Das beschriebene Verfahren wird vorzugsweise mit der beschriebenen Vorrichtung durchgeführt. Die beschriebene Vorrichtung ist vorzugsweise zur Durchführung des beschriebenen Verfahrens bestimmt und eingerichtet. Über die Zuleitung mit dem

Befeuchter wird ein Kohlendioxid umfassendes Eduktgas befeuchtet (Schritt a) des beschriebenen Verfahrens) und der Elektrolysezelle zugeleitet werden (Schritt b)). In der Elektrolysezelle kann die Elektrolyse durchgeführt werden (Schritt c)). Dazu weist die Elektrolysezelle vorzugsweise eine Strom- und Spannungsquelle auf, mittels derer ein Strom zwischen Kathode und Anode angelegt werden kann. Die Elektrolysezelle ist vorzugsweise als eine Hochtemperatur-Elektrolysezelle ausgebildet.

Im Kathodenraum kann ein Gas an der Kathode entlang strömen. Weiterhin weist die Elektrolysezelle vorzugsweise einen Anodenraum auf, der an die Anode angrenzt. Im Anodenraum kann ein Gas an der Anode entlang strömen. Anodenraum und/oder Kathodenraum weisen vorzugsweise jeweils einen Einlass und einen Auslass auf. Die Elektrolysezelle weist vorzugsweise weiterhin eine Zuleitung zum Kathodenraum auf, über die ein Spülgas in den Anodenraum eingeleitet werden kann.

Die Vorrichtung umfasst weiterhin eine Erwärmungseinrichtung zum Erwärmen von Wasser innerhalb des Befeuchters mittels eines Produktes einer in der Elektrolysezelle ablaufenden Elektrolyse.

Die Erwärmungseinrichtung umfasst vorzugsweise eine Leitung, durch welche Produkte der Elektrolyse durch das für Schritt a) verwendete Wasser geleitet werden können. Alternativ kann die Erwärmungseinrichtung auch die oben beschriebenen Wärmetauscher umfassen.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll, sondern nur durch den Gegenstand der unten definierten Ansprüche.

Gleiche Bezugszeichen bezeichnen gleiche Gegenstände, so dass ggf. Erläuterungen aus anderen Figuren ergänzend herangezogen werden können. Es zeigen:
- Fig. 1:: ein Ablaufdiagramm eines erfindungsgemäßen Verfahrens, und
- Fig. 2:: eine erfindungsgemäße Vorrichtung.

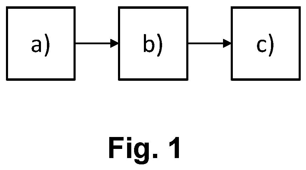

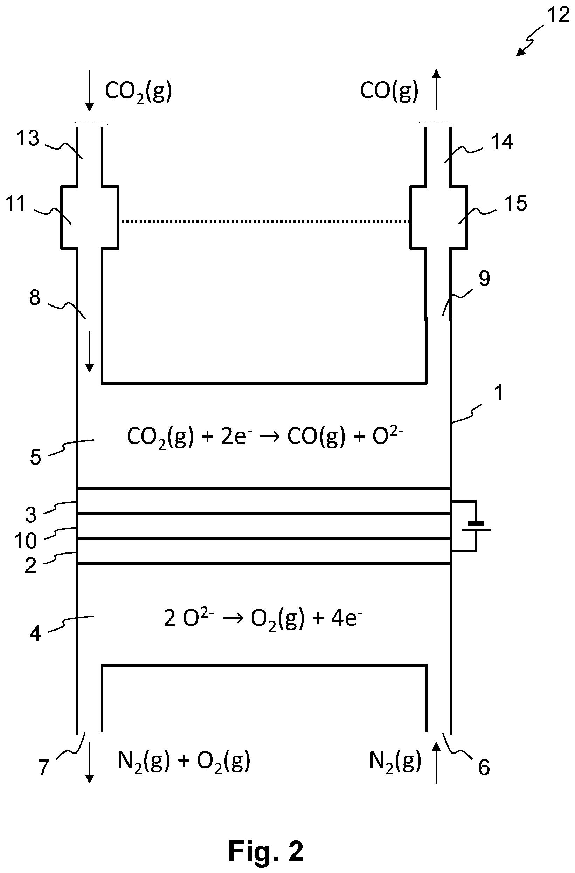

Fig. 1 zeigt ein Ablaufdiagramm eines Verfahrens zur Herstellung von Kohlenmonoxid. Das Verfahren wird unter Verwendung der Bezugszeichen aus Fig. 2 beschrieben. Das Verfahren umfasst:
a) Befeuchten eines Kohlendioxid umfassenden Eduktgases mit Wasser,
b) Zuleiten des befeuchteten Eduktgases aus Schritt a) in eine Elektrolysezelle 1, und
c) Elektrolysieren des gemäß Schritt b) zugeleiteten befeuchteten Eduktgases in der Elektrolysezelle 1, so dass das Kohlenmonoxid erhalten wird.

Fig. 2 zeigt eine Vorrichtung 12 zur Herstellung von Kohlenmonoxid, insbesondere gemäß dem Verfahren aus Fig. 1. Die Vorrichtung 12 umfasst eine Elektrolysezelle 1 mit einer Anode 2 und einer Kathode 3, die durch einen Elektrolyten 10 voneinander getrennt sind. Weiterhin umfasst die Elektrolysezelle 1 einen an die Anode 2 angrenzenden Anodenraum 4, in dem ein Gas an der Anode 2 entlang strömen kann. Weiterhin umfasst die Elektrolysezelle 1 einen an die Kathode 3 angrenzenden Kathodenraum 5, in dem ein Gas an der Kathode 3 entlang strömen kann. Der Anodenraum 4 hat einen Einlass 6 und einen Auslass 7. Der Kathodenraum 5 hat einen Einlass 8 und einen Auslass 9. An den Einlass 8 des Kathodenraums 5 ist eine Zuleitung 13 mit einem Befeuchter 11 angebunden. An den Auslass 9 des Kathodenraums 5 ist eine Ableitung 14 angebunden. Die Ableitung 14 umfasst eine Erwärmungseinrichtung 15 zum Erwärmen des Befeuchters 11 mittels eines Produktes einer in der Elektrolysezelle 1 ablaufenden Elektrolyse. Durch eine gepunktete Linie ist angedeutet, dass Wärme von der Erwärmungseinrichtung 15 zum Befeuchter 11 geleitet werden kann.

Über die Zuleitung 13 zum Kathodenraum 5 kann ein Kohlendioxid enthaltendes Eduktgas in den Kathodenraum 5 geleitet werden (Schritt b) des Verfahrens aus Fig. 1). Mit dem Befeuchter 11 wird das Eduktgas dabei befeuchtet (Schritt a)). In der Elektrolysezelle 1 wird die Elektrolyse durchgeführt (Schritt c)).

Dabei wird das Kohlendioxid aus dem befeuchteten Eduktgas an der Kathode 3 zu Kohlenmonoxid reduziert. An der Anode 2 können die bei der Elektrolyse gebildeten Sauerstoff-Ionen zu Sauerstoff reagieren. Ein Spülgas kann in den Einlass 6 des Anodenraums 4 eingeleitet und zusammen mit dem so entstandenen Sauerstoff aus dem Auslass 7 des Anodenraums 4 herausgeleitet werden. In der gezeigten Ausführungsform ist das Spülgas Stickstoff. Alternativ kann aber insbesondere auch Sauerstoff als Spülgas verwendet werden.

Das Eduktgas kann in Schritt a) befeuchtet werden, indem das Eduktgas durch Wasser geleitet wird, innerhalb des Befeuchters 11. Vorzugsweise beträgt ein Wassergehalt des befeuchteten Eduktgases 2 bis 6 %. Das Wasser innerhalb des Befeuchters 11 wird über die Erwärmungseinrichtung 15 durch ein aus dem Kathodenraum 5 entnommenes Produktgas erwärmt, vorzugsweise auf 25 bis 40°C.

Mit dem beschriebenen Verfahren und mit der beschriebenen Vorrichtung 12 kann Kohlenmonoxid durch CO₂-Elektrolyse mit einem besonders hohen Wirkungsgrad hergestellt werden. Das wird erreicht, indem das Kohlendioxid enthaltende Eduktgas vor der Elektrolyse befeuchtet wird.

### Bezugszeichenliste

- 1: Elektrolysezelle
- 2: Anode
- 3: Kathode
- 4: Anodenraum
- 5: Kathodenraum
- 6: Einlass des Anodenraums
- 7: Auslass des Anodenraums
- 8: Einlass des Kathodenraums
- 9: Auslass des Kathodenraums
- 10: Elektrolyt
- 11: Befeuchter
- 12: Vorrichtung
- 13: Zuleitung zum Kathodenraum
- 14: Ableitung aus dem Kathodenraum
- 15: Erwärmungseinrichtung

## Patentansprüche

1. Verfahren zur Herstellung von Kohlenmonoxid, umfassend:
a) Befeuchten eines Kohlendioxid umfassenden Eduktgases mit flüssigem Wasser, wobei das Eduktgas durch das flüssige Wasser geleitet wird,
b) Zuleiten des befeuchteten Eduktgases aus Schritt a) in eine Elektrolysezelle (1), und
c) Elektrolysieren des gemäß Schritt b) zugeleiteten befeuchteten Eduktgases
in der Elektrolysezelle (1), so dass das Kohlenmonoxid erhalten wird, wobei das für Schritt a) genutzte flüssige Wasser durch Wärme eines Produktes der Elektrolyse aus Schritt c) erwärmt wird, und wobei die Elektrolysezelle (1) eine Hochtemperaturelektrolysezelle ist, und wobei das Elektrolysieren in Schritt c) bei einer Temperatur von 800 °C bis 900 °C durchgeführt wird.

2. Verfahren nach Anspruch 1, wobei das Wasser in Schritt a) bei einer Temperatur im Bereich von 25 bis 40°C vorliegt.

3. Vorrichtung (12) zur Herstellung von Kohlenmonoxid, umfassend:
- eine Hochtemperaturelektrolysezelle (1) mit einer Anode (2) und einer Kathode (3), die zumindest durch einen Elektrolyten (10) voneinander getrennt sind, sowie einem an die Kathode (3) angrenzenden Kathodenraum (5),
- eine Zuleitung (13) zum Kathodenraum (5), welche einen Befeuchter (11) umfasst, der so ausgebildet ist, dass ein Eduktgas zur Befeuchtung durch in ihm enthaltenes flüssiges Wasser geleitet wird, und
- eine Erwärmungseinrichtung (15) zum Erwärmen von flüssigem Wasser innerhalb des Befeuchters (11) mittels eines Produktes einer in der Hochtemperaturelektrolysezelle (1) ablaufenden Elektrolyse nach Art der Hochtemperaturelektrolyse bei 800°C bis 900°C, wobei Wärme von der Erwärmungseinrichtung (15) zum Befeuchter (11) geleitet wird.

## Claims

1. Process for producing carbon monoxide, comprising:
a) humidifying a reactant gas comprising carbon dioxide with liquid water, wherein the reactant gas is passed through the liquid water,
b) supplying the humidified reactant gas from step a) to an electrolysis cell (1) and
c) electrolyzing the humidified reactant gas supplied according to step (b) in the electrolysis cell (1) to obtain carbon monoxide;
wherein the liquid water used for step a) is heated using heat from a product of the electrolysis from step c) and wherein the electrolysis cell (1) is a high-temperature electrolysis cell and wherein the electrolyzing in step c) is performed at a temperature of 800°C to 900°C.

2. Process according to Claim 1, wherein the water in step a) has a temperature in the range from 25°C to 40°C.

3. Apparatus (12) for producing carbon monoxide, comprising:
- a high-temperature electrolysis cell (1) having an anode (2) and a cathode (3) separated from one another by at least an electrolyte (10) and a cathode space (5) adjacent to the cathode (3),
- a feed conduit (13) to the cathode space (5) which comprises a humidifier (11) configured such that a reactant gas is passed through liquid water present in it for humidification and
- a heating means (15) for heating liquid water within the humidifier (11) using a product of an electrolysis proceeding in the high-temperature electrolysis cell (1) in the manner of the high-temperature electrolysis at 800°C to 900°C, wherein heat is passed from the heating means (15) to the humidifier (11).

## Revendications

1. Procédé de production de monoxyde de carbone, comprenant :
a) humidification d'un gaz de départ comprenant du dioxyde de carbone avec de l'eau liquide, le gaz de départ étant guidé à travers l'eau liquide,
b) acheminement du gaz de départ humidifié issu de l'étape a) dans une cellule d'électrolyse (1), et
c) électrolyse du gaz de départ humidifié acheminé selon l'étape b) dans la cellule d'électrolyse (1) de manière à obtenir le monoxyde de carbone,
l'eau liquide utilisée pour l'étape a) étant chauffée par de la chaleur d'un produit de l'électrolyse issu de l'étape c), et la cellule d'électrolyse (1) étant une cellule d'électrolyse à haute température, et l'électrolyse de l'étape c) étant réalisée à une température de 800 °C à 900 °C.

2. Procédé selon la revendication 1, l'eau de l'étape a) étant présente à une température dans la plage de 25 °C à 40 °C.

3. Dispositif (12) de production de monoxyde de carbone, comprenant :
- une cellule d'électrolyse à haute température (1) avec une anode (2) et une cathode (3), qui sont séparées l'une de l'autre au moins par un électrolyte (10), ainsi qu'une chambre de cathode (5) jouxtant la cathode (3),
- une conduite d'acheminement (13) menant à la chambre de cathode (5), laquelle comprend un humidificateur (11) qui est formé de telle sorte qu'un gaz de départ est guidé à travers l'eau liquide qu'il contient pour l'humidification, et
- un système de chauffage (15) destiné à chauffer de l'eau liquide à l'intérieur de l'humidificateur (11) au moyen d'un produit d'une électrolyse se déroulant dans la cellule d'électrolyse à haute température (1) à la manière d'une électrolyse à haute température à une température de 800 °C à 900 C°, la chaleur étant acheminée du système de chauffage (15) vers l'humidificateur (11).
